Europäisches Patentamt

European Patent Office

Office européen des brevets

(19)

(11) Numéro de publication: **0 086 243**
**A1**

(12) **DEMANDE DE BREVET EUROPEEN**

(21) Numéro de dépôt: **82101055.0**

(22) Date de dépôt: **12.02.82**

(51) Int. Cl.³: **B 23 Q  1/16,** B 23 C  9/00

(43) Date de publication de la demande: **24.08.83**
**Bulletin 83/34**

(84) Etats contractants désignés: **CH DE IT LI**

(71) Demandeur: **R. DUFIEUX: Société Anonyme dite, 4, rue Monmousseau, F-38130 Echirolles (FR)**

(72) Inventeur: **Genans, Michel, 16, rue Barral de Montferrat, F-38000 Grenoble (FR)**

(74) Mandataire: **Casalonga, Axel et al, BUREAU D.A. CASALONGA OFFICE JOSSE & PETIT Baaderstrasse 12-14, D-8000 München 5 (DE)**

(54) **Dispositif porte-outil en particulier pour machine-outil d'un type universel permettant de réaliser notamment des usinages tels que des rainures en arc de cercle.**

(57) Dispositif porte-outil (1) pour la réalisation de rainures en arc de cercle de différents rayons et de différents arcs et se montant sur une machine-outil universelle, comprenant un support (2) se fixant sur la machine-outil, un carter (9) monté sur le support (2) pour tourner autour d'un axe principal (4), un fourreau porte-broche (21) monté sur le carter (9) pour tourner autour d'un axe secondaire (16) et portant une broche porte-outil (28) à axe (31) différent du second axe (16), une transmission à engrenages (34) entre l'arbre de sortie de la machine-outil et la broche (28), un moyen de réglage (51) pour faire tourner le fourreau porte-broche (21) par rapport au carter (9) autour dudit second axe (16) et un moyen d'entraînement (59) pour faire tourner le carter (9) par rapport au support (2).

**0086243**

"Dispositif porte-outil en particulier pour machine-outil d'un type universel permettant de réaliser notamment des usinages tels que des rainures en arc de cercle".

--------

La présente invention concerne un dispositif porte-outil pour machine-outil d'un type universel permettant de réaliser notamment des usinages tels que des rainures en arc de cercle.

Lorsqu'on désire créer une étanchéité entre deux pièces présentant notamment des surfaces de contact annulaires radiales et des éléments de fixation tels que des boulons qui traversent les surfaces de contact, il est de coutume de réaliser des rainures dans la surface de contact d'une des pièces et de disposer un joint d'étanchéité dans cette rainure. La réalisation de telles rainures pose certaines difficultés notamment lorsqu'il est nécessaire de contourner les trous dans lesquels passent les éléments de fixation. Actuellement, on résoud ce problème en usinant les rainures sous la forme de lignes brisées ou en utilisant la commande numérique. Cependant, la réalisation de rainures en lignes brisées sans commande numérique coûte cher car elle nécessite des temps de réglage de la machine-outil et de la pièce à usiner importants. Par ailleurs, peu d'entreprises possèdent une machine-outil à commande numérique car une telle machine nécessite un très gros investissement.

On connaît en outre un appareil à rayonner pour effectuer des usinages en arc de cercle de différents rayons comprenant trois axes parallèles dont les écartements peuvent être réglés et sur lesquels est montée une transmission à engrenages portée par un boîtier en plusieurs parties. Cet appareil connu présente de nombreux inconvénients. En particulier, le montage des différentes parties du boîtier et des différents éléments de la transmission à engrenages ne permet pas d'effectuer des usinages de précision et à grande vitesse.

La présente invention a pour but de remédier aux inconvénients de la technique actuelle. Elle propose en effet un dispositif porte-outil dont la structure permet notamment la réalisation de rainures de qualité, à grande vitesse et en conséquence à un prix de revient d'usinage très faible tout en évitant la commande numérique.

Le dispositif porte-outil selon la présente demande peut être monté sur une machine-outil d'un type universel telle qu'une fraiseuse ou une aléseuse et permet de transmettre le mouvement de l'arbre de sortie de la machine-outil à l'outil et de réaliser notamment

2  0086243

des usinages tels que des rainures en arc de cercle de différents rayons et de différents arcs.

Dans ce but, le dispositif porte-outil selon la présente invention comprend un support pouvant se fixer sur le corps de ou sur la tête de la machine-outil et présentant un axe principal, un carter monté sur ledit support de manière à pouvoir tourner autour de l'axe principal dudit support et comportant un axe secondaire différent dudit axe principal, un fourreau porte-broche monté sur ledit carter de manière à pouvoir tourner autour dudit axe secondaire, une broche porte-outil portée par ledit fourreau porte-broche de manière à pouvoir tourner autour d'un axe différent dudit axe secondaire, une transmission à engrenages comprenant un arbre principal monté selon ledit axe principal, relié à l'arbre de sortie de la machine outil et présentant une partie dentée, et un arbre secondaire monté selon ledit axe secondaire et comportant une première partie dentée en prise avec la partie dentée dudit arbre principal et une deuxième partie dentée en prise avec une partie dentée de ladite broche porte-outil, un moyen de réglage permettant de faire tourner ledit fourreau porte-broche autour dudit axe secondaire en vue de régler l'écartement entre l'axe de la broche et ledit axe principal, et un moyen d'entraînement permettant de faire tourner ledit carter par rapport audit support de manière à effectuer un usinage en arc de cercle dont le rayon principal est égal à l'écartement entre ledit axe principal et l'axe de ladite broche.

Selon la présente invention, ledit support comprend une partie annulaire cylindrique centrée sur ledit axe principal et s'étendant vers l'avant en direction dudit carter et ledit carter comprend une partie annulaire cylindrique centrée sur ledit axe principal et s'étendant vers l'arrière en direction dudit support, la partie annulaire cylindrique dudit support et la partie annulaire cylindrique dudit carter pénétrant l'une dans l'autre, et ledit carter étant monté tournant sur ledit support par l'intermédiaire d'au moins un roulement disposé entre ladite partie annulaire cylindrique dudit support et ladite partie annulaire cylindrique dudit carter.

Selon la présente invention, ledit roulement est de préférence un roulement à haute précision et à haute résistance.

Selon la présente invention, ledit carter comprend de préférence une partie radiale à partir de laquelle s'étend vers l'arrière sa susdite partie annulaire cylindrique, cette partie

3 0086243

radiale présentant une face annulaire arrière en contact avec une face annulaire avant de la partie annulaire cylindrique dudit support, un moyen étant prévu pour appliquer ladite face annulaire arrière dudit carter sur ladite face annulaire avant dudit support en vue de solidariser de manière amovible ledit carter audit support.

Selon la présente invention, ledit carter comprend de préférence une partie cylindrique intérieure présentant un passage central centré sur ledit axe principal, ledit arbre principal étant monté tournant dans ce passage de telle sorte que sa partie dentée soit à l'avant de ladite partie cylindrique intérieure et cet arbre principal comportant un moyen de liaison avec l'arbre de sortie de la machine-outil situé à l'arrière de ladite partie cylindrique intérieure.

Selon la présente invention, ledit arbre principal est de préférence monté en alignement avec l'arbre de sortie de la machine outil, ledit moyen de liaison étant formé par un élément de liaison axiale fixé à l'extrémité arrière dudit arbre principal et coopérant avec l'extrémité de l'arbre de sortie de la machine-outil.

Selon la présente invention, ledit arbre principal est de préférence monté dans le passage de ladite partie cylindrique intérieure par l'intermédiaire de roulements.

Selon la présente invention, ladite partie cylindrique intérieure dudit carter peut avantageusement formée ladite partie annulaire cylindrique de ce carter, ladite partie annulaire cylindrique dudit support l'entourant.

Selon la présente invention, ladite partie radiale dudit carter peut avantageusement s'étendre vers l'extérieur à partir de ladite partie cylindrique intérieure.

Selon la présente invention, ledit moyen d'entraînement comprend de préférence une bague à denture extérieure fixée à l'extrémité arrière de ladite partie cylindrique intérieure et centrée selon ledit axe principal et un arbre d'entrée transversal porté par ledit support et dont une extrémité peut être reliée à un moyen d'entraînement extérieur, cet arbre d'entrée portant, à l'intérieur dudit support, une vis sans fin qui engrène avec ladite bague.

Selon la présente invention, ledit carter comprend de préférence une partie cylindrique extérieure s'étendant vers l'avant et un couvercle radial qui est fixé sur la face avant de cette partie cylindrique extérieure et qui porte ledit fourreau porte-broche.

4    0086243

Selon la présente invention, ledit fourreau porte-broche comprend, de préférence, une partie annulaire cylindrique dont la partie d'extrémité arrière est disposée dans une ouverture cylindrique avant du carter en vue de son centrage et de sa rotation selon ledit axe secondaire et qui présente un épaulement annulaire extérieur en vue de son maintien axial, cet épaulement annulaire étant disposé avec jeu entre la face avant dudit carter et une partie radiale d'une bague de maintien fixée audit carter.

Selon la présente invention, ledit moyen de réglage dudit fourreau porte-broche est formé de préférence par un arbre présentant une denture insérée dans ladite bague de maintien et en prise avec une denture formée à la périphérie dudit épaulement annulaire, arbre qui s'étend au travers de ladite bague de maintien en vue de son entraînement en rotation.

Le dispositif selon la présente invention peut, de préférence, comprendre un moyen permettant de solidariser de manière amovible ledit fourreau porte-broche audit carter, ce moyen étant formé par des pièces de blocage qui, lorsqu'elles sont serrées, appuient sur ledit épaulement annulaire pour l'appliquer contre la face avant dudit carter.

Selon la présente invention, ledit arbre secondaire peut avantageusement être porté, par l'intermédiaire d'un roulement, d'une part par ledit carter et d'autre part par ledit fourreau porte-broche.

La présente invention sera mieux comprise à l'étude d'un dispositif porte-outil décrit à titre d'exemple non limitatif et illustré par le dessin sur lequel ;

- la figure 1 représente le dispositif porte-outil en coupe ;

- et la figure 2 représente la coupe II-II du dispositif porte-outil de la figure 1.

Le dispositif porte-outil représenté sur les figures et repéré d'une manière générale par la référence 1 peut être monté sur une machine-outil d'un type universel telle qu'une fraiseuse ou une aléseuse.

Il comprend un support 2 constitué par une partie cylindrique 3 qui présente un axe principal 4 en alignement avec l'axe de l'arbre de sortie de la machine-outil qui n'a pas été réprésentée et un flasque radial 5 fixé à la partie arrière de la partie cylindri-

5 0086243

que 3 par des vis 6. Le flasque 5 présente un passage central 7 ainsi que des trous périphériques 8 extérieurs à la partie cylindrique 3 destinés au passage de vis de fixation du support 2 au carter ou à la tête de la machine-outil.

Le dispositif porte-outil 1 comprend également un carter 9 qui présente une partie radiale 10 en forme de disque dont la partie arrière est en contact avec la face radiale avant 11 de la partie cylindrique 3 du support 2, une partie cylindrique 12 centrée sur l'axe principal 4 et s'étendant à partir de la partie radiale en forme de disque 10 d'une part vers l'avant et d'autre part vers l'arrière à l'intérieur de la partie cylindrique 3 du support 2 pour ménager un passage cylindrique 12a centré selon l'axe principal 4 traversant la partie radiale 10 et une partie cylindrique 13 d'un diamètre plus grand que le diamètre de la partie cylindrique 3 du support 2 et s'étendant vers l'avant depuis la partie radiale en forme de disque 10.

Le carter 9 comprend également un couvercle radial 14 qui est fixé sur la face avant de la partie cylindrique 13 par des vis 15.

Le carter 9 détermine un axe secondaire 16 différent de l'axe principal 4 et parallèle à celui-ci.

Le couvercle 14 du carter 9 comprend une ouverture cylindrique 17 centrée sur l'axe secondaire 16.

Le carter 9 est monté tournant autour de l'axe principal 4 par rapport au support 2 par l'intermédiaire d'un roulement spécial 18 à haute résistance et à haute précision, ce roulement 18 étant monté autour de la partie arrière de la partie cylindrique 12 du carter 9 et fixé sur la partie radiale 10 du carter 9 par des vis axiales 19 et sur la partie avant intérieure de la partie cylindrique 3 du support 2 par des vis axiales 20.

Le dispositif porte-outil représenté comprend également un fourreau porte-broche 21. Ce fourreau porte-broche 21 comprend une partie radiale en forme de disque 22, une partie en forme de cylindre 23 qui s'étend vers l'arrière et une partie cylindrique 24 d'un diamètre plus petit qui s'étend vers l'avant, le disque 22 effectuant la liaison entre les parties cylindriques 23 et 24.

La partie cylindrique 23 du fourreau porte-broche 21 présente à l'extérieur un épaulement annulaire 25 de telle sorte que la partie d'extrémité arrière de la partie cylindrique 23 pénètre dans l'ouverture cylindrique 17 du carter 9 et que la face arrière de

6   0086243

l'épaulement annulaire 25 viennent en contact avec la face avant du couvercle 14 du carter 9. Le fourreau porte-broche 21 est donc entré dans l'ouverture 17 du couvercle 14 et peut tourner selon l'axe secondaire 16. Le fourreau porte-broche 21 est par ailleurs maintenu grâce à une bague annulaire 26 de section en forme de L qui est fixée à la face avant du couvercle 14 du carter 9, l'épaulement annulaire 25 étant disposé entre la face avant du couvercle 14 et la partie radiale de la bague 26 avec jeu.

La partie cylindrique 24 du fourreau porte-broche 21 ménage un passage cylindrique 27 dans lequel est montée une broche 28 sensiblement cylindrique par l'intermédiaire de deux roulements 29 et 30 de telle sorte que l'axe 31 de cette broche 28 soit parallèle à l'axe secondaire 16 et décentrée par rapport à celui-ci. La partie avant de la broche 28 est conçue de manière à pouvoir recevoir un outil tel qu'une fraise à rainurer qui n'a pas été représenté sur la figure. A cet effet, la partie avant de la broche 28 comprend un trou borgne tronconique 32 et un écrou de fixation d'outil 33 se vissant sur l'extrémité avant de la broche 28, l'axe de l'outil étant disposé selon l'axe 31 de la broche 28.

Le dispositif porte-outil represente sur les figures comprend également une transmission à engrenages repérée d'une manière générale par la référence 34 et montée à l'intérieur du support 2 du carter 9 et du fourreau porte-outil 21.

La transmission à engrenages 34 comprend un arbre principal 35 monté selon l'axe principal 4 et s'étendant dans le passage central 12a du carter 9. La partie arrière de l'arbre principal 35 présente des canelures extérieures axiales 36 et porte un élément de liaison 37 présentant des canelures intérieures correspondantes, cet élément de liaison 37 étant conçu pour être connecté rapidement à l'extrémité de l'arbre de sortie de la machine-outil sur laquelle le dispositif 1 au travers du passage central 7 du flasque 5 du support 2, l'arbre principal 35 étant en alignement avec l'arbre de sortie de la machine-outil. A cet effet, la partie arrière de l'élément de liaison 37 comprend un évidement central cylindrique 38 et une rainure radiale 39.

L'arbre 37 est monté selon l'axe principal 4 dans le passage central 12a de la partie cylindrique 12 du carter 9 grâce à un roulement 40 qui prend appui d'une part sur l'arbre 35 et d'autre part sur la partie avant de la partie cylindrique 12 et un roulement 41 qui prend appui d'une part sur la partie arrière canelée intérieurement de l'élément de liaison 37 et d'autre part sur la partie arrière de la partie cylindrique 12, une rondelle 35a fixée à l'extrémité de l'arbre 35 et disposés dans l'évidement 39 maintenant l'ensemble.

L'arbre principal 35 s'étend dans le carter 9 vers l'avant au-delà de sa partie cylindrique 12 et comprend, à son extrémité avant, une denture extérieure 42.

La transmission à engrenages 34 comprend également un arbre secondaire 43 monté selon l'axe secondaire 16 et disposé dans le carter 9. L'arbre secondaire 43 est à double denture et comprend une denture extérieure 44 en prise avec la denture 42 de l'arbre principal 35 et une denture intérieure 45 formant une couronne à denture intérieure. Cette denture intérieure 45 est réalisée dans un évidement central 46 de l'arbre secondaire 43, cet évidement étant ouvert du côté avant. Les dentures 44 et 45 de l'arbre secondaire 43 sont centrées selon l'axe secondaire 16.

La partie arrière de la broche 28 s'étend jusqu'à l'intérieur de l'évidement 46 de l'arbre secondaire 43 et comporte une denture extérieure 47 qui est en prise avec la denture intérieure 45 de l'arbre secondaire 43. Le diamètre de la denture 47 de la broche 28 est, dans l'exemple représenté, sensiblement égal au tiers du diamètre de la denture intérieure 45 de l'arbre secondaire 43.

L'arbre secondaire 43 est monté selon l'axe secondaire 16 grâce à un roulement 48 monté d'une part sur la partie arrière de l'arbre secondaire 43 et d'autre part dans un évidement 49 ouvert vers l'avant réalisé dans sa partie radiale en forme de disque 10 du carter 9 et en outre grâce à un roulement 50 monté à l'avant de la denture 44 entre la partie avant de l'arbre secondaire 43 entourant la denture intérieure 44 et la partie cylindrique 27 du fourreau porte-broche 21.

Le dispositif porte-outil 1 comprend également un moyen de réglage repéré d'une manière générale par la référence 51. Ce moyen de réglage 51 est formé par une denture 52 réalisée à la périphérie de l'épaulement 25 du fourreau porte-broche 21 et un arbre 53 qui présente une denture 54 en prise avec la denture 52 et insérée dans la bague 26 de maintien du fourreau porte-broche 21. La partie arrière de l'arbre 53 est montée de manière à pouvoir tourner et de manière à être centrée dans un orifice 55 du couvercle 14 du carter 9 par l'intermédiaire d'une bague de frottement 56 et la partie avant de l'arbre 53 s'étend au travers et au-delà de la bague 26 et présente

8     0086243

une section carrée pouvant recevoir une clé ou une manivelle non représentée.

Le dispositif porte-outil 1 comprend également un moyen permettant de solidariser de manière amovible le fourreau porte-outil 21 au carter 9. Ce moyen est formé par des pièces de blocage 57 montées dans des évidements de la bague 26 régulièrement répartis. Ces pièces de blocage 57 sont fixées à la partie axiale de la bague 26 par des vis 58 qui, lorsqu'elles sont serrées, permettent aux pièces de blocage 57 d'appuyer sur l'épaulement 25 du fourreau porte-broche 21 pour l'appliquer contre la face avant du couvercle 14 du carter 9.

Le dispositif porte-outil 1 comprend également un moyen d'entraînement repéré d'une manière générale par la référence 59 permettant de faire tourner le carter 9 par rapport au support 2. Ce moyen d'entraînement 59 comprend une bague 60 fixée à l'extrémité arrière de la partie cylindrique 12 du carter 9 par des vis 61 et présentant une denture extérieure 62 centrée selon l'axe principal 4.

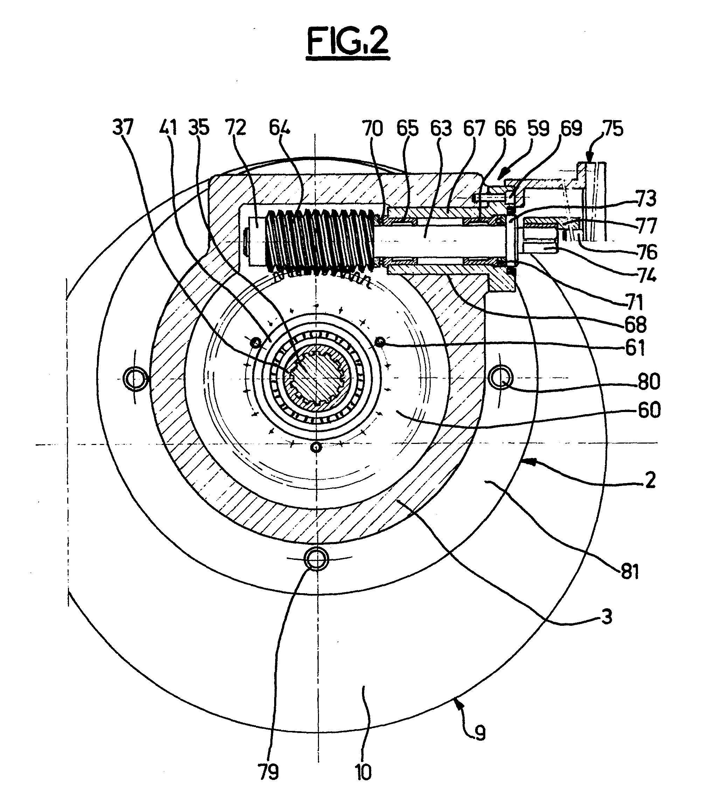

Comme on peut mieux le voir sur la figure 2, le moyen d'entraînement 59 comprend également un arbre d'entrée transversal 63 qui porte une vis sans fin 64 en prise avec la denture 62 de la bague 60.

L'arbre d'entrée 63 est monté, par l'intermédiaire de roulements à aiguilles 65 et 66 dans un manchon 67 qui est disposé dans une ouverture transversale 68 de la partie cylindrique 3 du support 2 et fixé à cette partie cylindrique 3 par des vis axiales 69. Aux roulements à aiguilles 65 et 66 sont associées des butées axiales à billes 70 et 71 qui sont respectivement en appui contre la vis sans fin 64 maintenue par un écrou 72 vissé sur l'extrémité intérieure de l'arbre d'entrée 63 et contre un épaulement 73 de l'arbre d'entrée 63. les butées 70 et 71 étant en outre en appui contre des épaulements opposés du manchon 67.

L'arbre de sortie 63 s'étend à l'extérieur du manchon 67 et du support 2 et son extrémité extérieure présente une section carrée 74. Un moteur électrique d'entraînement 75 représenté schématiquement et partiellement a son arbre de sortie 76 aligné avec l'arbre d'entrée 63 et lié en rotation à ce dernier par un élément de liaison 77. Le moteur électrique d'entraînement 75 peut être fixé soit directement sur le support 2 soit à la machine-outil.

Le dispositif porte-outil 1 comprend également un moyen de blocage permettant de solidariser en rotation de manière amovible le carter 9 au support 2. Ce moyen de blocage comprend des vis 78 réparties sur la périphérie de la partie cylindrique 3 du support 2 qui traverse des douilles 79 disposées dans des orifices 80 d'un prolongement radial extérieur 81 de la partie avant de la partie cylindrique 3 du support 2. L'extrémité filetée des vis 78 coopère avec des écrous 82 qui sont disposés dans une queue-d'aronde annulaire 83 formée dans la face arrière de la partie radiale en forme de disque 10 en contact 11 de la partie cylindrique 3 du support 2. Les douilles 79 sont disposées entre la face arrière du carter 9 et la tête des vis 78. Dans l'exemple représenté, trois vis de blocage 78 sont prévues.

Le dispositif porte-outil 1 comprend également une règle annulaire placée dans une gorge périphérique de la partie cylindrique 3 du support 2 de manière adjacente au carter 9, cette règle pouvant tourner et pouvant être bloquée sur le support 2 grâce à une vis radiale 85. Cette règle graduée 84 permet de connaître la variation de position angulaire entre le carter 9 et le support 2, On a également prévu sur la bague 26 et sur le fourreau porte-broche 21 des graduations pour connaître soit la position angulaire du fourreau porte-broche 21 par rapport au carter 9 soit directement l'écartement entre l'axe principal 4 et l'axe 31 de la broche porte-outil 28.

Enfin, le dispositif porte-outil 1 comprend un déflecteur 86 fixé sur la face intérieure du flasque 5 autour du passage central 7 et qui s'étend en direction de la périphérie de l'élément de liaison 37, un joint annulaire à lèvres 87 entre la partie de la partie cylindrique 12 du carter 9 et l'élément de liaison 37, un joint torique 88 monté dans une gorge périphérique de la partie cylindrique 23 du fourreau porte-broche 21 et en contact avec l'ouverture cylindrique 17 du couvercle 14 et un joint annulaire à lèvres 89 monté dans une bague 90 fixée sur la face avant de la partie cylindrique 24 du fourreau porte-broche 21 par des vis 91 et en contact avec une surface périphérique avant de la broche 28, ledit déflecteur et lesdits joints étant prévus pour le maintien du lubrifiant des transmissions 34 et 59 et leur protection.

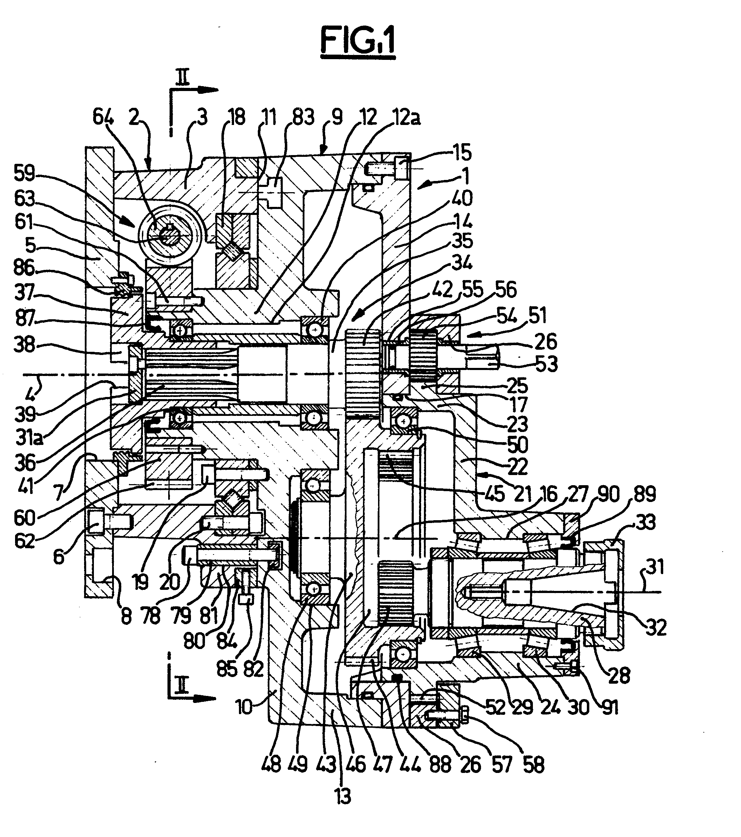

On va maintenant décrire comment peut être utilisé le dispositif porte-outil décrit en référence aux figures 1 et 2.

On monte le dispositif porte-outil 1 sur le carter ou sur la tête d'une machine-outil d'un type universel telle qu'une fraiseuse ou une mortaiseuse en disposant l'arbre principal 35 en alignement avec l'arbre de sortie de la machine-outil, l'élément de liaison 37 effectuant la liaison en rotation entre l'arbre de sortie de la machine-outil et l'arbre principal 35. On monte dans la broche 28 un outil tel qu'une fraise à rainurer.

Le mouvement de rotation de l'arbre de sortie de la machine-outil est transmis à l'outil par l'intermédiaire de la transmission à engrenages 34.

Pour effectuer une rainure en ligne droite sur une pièce placée en face de l'outil monté dans la broche 28, il suffit d'opérer comme habituellement en déplaçant soit la tête de la machine-outil soit la pièce à usiner. Il est bon d'avoir pris soin avant de faire cet usinage de bloquer les vis 58 pour solidariser le fourreau porte-broche 21 au carter 9 et de bloquer les vis 78 pour solidariser le carter 9 au support 2.

Pour effectuer une rainure présentant un rayon principal déterminé, on règle l'écartement entre l'axe de la broche 31 qui correspond à l'axe de l'outil et l'axe principal 4 au rayon désiré en faisant tourner l'arbre 53 qui, grâce à sa denture 54, fait tourner le fourreau porte-broche 21 autour de l'axe secondaire 16. Lors de la rotation du fourreau porte-broche 21, la denture 47 de la broche 28 roule sur la denture intérieure 45 de l'arbre secondaire 43 fixe. Quand ce réglage est effectué, on solidarise de préférence le fourreau porte-broche 21 au carter 9 en bloquant les vis 58. Pour effectuer l'usinage de la rainure selon le rayon désiré, et après avoir pris soin du fait que les vis 78 soient débloquées, on met en route la machine-outil qui alors entraîne l'outil par l'intermédiaire de la transmission à engrenages 34 et on met en route le moteur électrique d'entraînement 75 qui, par l'intermédiaire de la vis sans fin 64 et de la bague à denture extérieure 60, fait tourner le carter 9 autour de l'axe principal 4 et détermine ainsi le mouvement d'avance de l'outil. L'arc couvert par l'usinage peut être quelconque.

Il est évidemment possible d'effectuer en continu des rainures droites et des rainures en arc de cercle.

D'après l'exemple représenté, on peut effectuer des rainures en arc de cercle dont le rayon maximum est égal à la distance entre l'axe principal 4 et l'axe secondaire 16 à laquelle on ajoute la différence entre le rayon principal de la denture 45 de l'arbre secondaire 43 et le rayon principal de la denture 47 de la broche 28 dont le rayon minimum est égal à la distance entre l'axe principal 4 et l'axe secondaire 16 à laquelle on retranche la différence entre le rayon de la denture 45 de l'arbre secondaire 43 et le rayon principal de la denture 47 de la broche 28. Tous les rayons intermédiaires sont possibles.

Compte tenu de sa structure, le dispositif porte- outil 1 qui vient d'être décrit est peu volumineux et est très robuste. En effet, sa transmission à engrenages 35 peut transmettre à la broche 28 le couple moteur de l'arbre de sortie de la machine-outil et son dispositif d'entraînement 59 également à engrenages autorise les vitesses d'avance habituelles.

La présente invention ne se limite pas au dispositif porte-outil décrit ci-dessus en référence aux figures 1 et 2. On peut en effet concevoir notamment une transmission à engrenages différente. et en particulier un arbre secondaire comprenant deux dentures extérieures, l'une étant prise avec la denture extérieure de la broche 28. La structure de la transmission à engrenages pourrait notamment dépendre des rapports de vitesse entre la broche 28 et l'arbre de sortie de la machine-outil et des rayons maximum et minimum des rainures que l'on voudrait usiner. On peut noter en outre que le dispositif porte- outil pourrait également être utilisé pour usiner uniquement des contours présentant des arcs de cercle.

Bien d'autres variantes du dispositif porte-outil selon la présente invention sont également possibles sans sortir du cadre de la présente invention.

<center>REVENDICATIONS</center>

1. Dispositif porte-outil pouvant être monté sur une machine outil d'un type universel telle qu'une fraiseuse ou une aléseuse et permettant de transmettre le mouvement de l'arbre de sortie de ladite machine outil à l'outil et de réaliser notamment des usinages tels que des rainures en arc de cercle de différents rayons et de différents arcs, comprenant un support pouvant se fixer sur le corps de la machine outil et présentant un axe principal, un carter monté sur ledit support de manière à pouvoir tourner autour de l'axe principal dudit support et comportant un axe secondaire différent dudit axe principal, un fourreau porte-broche monté sur ledit carter de manière à pouvoir tourner autour dudit axe secondaire, une broche porte-outil portée par ledit fourreau porte-broche de manière à pouvoir tourner autour d'un axe différent dudit axe secondaire, une transmission à engrenages comprenant un arbre principal monté selon ledit axe principal, relié à l'arbre de sortie de la machine outil et présentant une partie dentée et un arbre secondaire monté selon ledit axe secondaire et comportant une première partie dentée en prise avec la partie dentée dudit arbre principal et une deuxième partie dentée en prise avec une partie dentée de ladite broche porte-outil, un moyen de réglage permettant de faire tourner ledit fourreau porte-broche autour dudit axe secondaire en vue de régler l'écartement entre l'axe de la broche et ledit axe principal, et un moyen d'entraînement permettant de faire tourner ledit carter par rapport audit support de manière à effectuer un usinage en arc de cercle dont le rayon principal est égal à l'écartement entre ledit axe principal et l'axe de ladite broche, caractérisé par le fait que ledit support (2) comprend une partie annulaire cylindrique (3) centrée sur ledit axe principal (4) et s'étendant vers l'avant en direction dudit carter (9) et que ledit carter (9) comprend une partie annulaire cylindrique (12) centrée sur ledit axe principal (4) et s'étendant vers l'arrière en direction dudit support (2), la partie annulaire cylindrique (3) dudit support (2) et la partie annulaire cylindrique (12) dudit carter (9) pénétrant l'une dans l'autre, et ledit carter (9) étant monté tournant sur ledit support (2) par l'intermédiaire d'au moins un roulement (18) disposé entre ladite partie annulaire cylindrique (3) dudit support (2) et ladite partie annulaire cylindrique (12) dudit carter (9).

2. Dispositif porte-outil selon la revendication 1, caractérisé par le fait que ledit roulement (18) est un roulement à

13    0086243

haute précision et à haute résistance.

3. Dispositif porte-outil selon l'une des revendications 1 et 2, caractérisé par le fait que ledit carter (9) comprend une partie radiale (10) à partir de laquelle s'étend vers l'arrière la susdite partie annulaire cylindrique (12), cette partie radiale (10) présentant une face annulaire arrière en contact avec une face annulaire avant (11) de la partie annulaire cylindrique (3) dudit support (2), un moyen étant prévu pour appliquer ladite face annulaire arrière dudit carter (9) sur ladite face annulaire avant dudit support (2) en vue de solidariser de manière amovible ledit carter audit support.

4. Dispositif porte-outil selon l'une quelconque des revendications précédentes, caractérisé par le fait que ledit carter (9) comprend une partie cylindrique intérieure (12) présentant un passage central (12a) centré sur ledit axe principal (4), ledit arbre principal (5) étant monté tournant dans ce passage de telle sorte que sa partie dentée soit à l'avant de ladite partie cylindrique intérieure (12) et comportant un moyen de liaison avec l'arbre de sortie de la machine outil situé à l'arrière de ladite partie cylindrique intérieure (12).

5. Dispositif porte-outil selon la revendication 4, caractérisé par le fait que ledit arbre principal (35) est en alignement avec l'arbre de sortie de la machine outil, ledit moyen de liaison étant formé par un élément de liaison axial fixé à l'extrémité arrière dudit arbre principal et coopérant avec l'extrémité de l'arbre de sortie de la machine outil.

6. Dispositif porte-outil selon l'une des revendications 4 et 5, caractérisé par le fait que ledit arbre principal (12a) est monté dans le passage de ladite partie cylindrique intérieure (12) par l'intermédiaire de roulements.

7. Dispositif porte-outil selon l'une quelconque des revendications 4 à 6, caractérisé par le fait que ladite partie cylindrique intérieure dudit carter (9) forme ladite partie annulaire cylindrique de ce carter, ladite partie annulaire cylindrique (3) dudit support (2) l'entourant.

8. Dispositif porte-outil selon l'une quelconque des revendications 4 à 7, caractérisé par le fait que ladite partie radiale (10) dudit carter (9) s'étend vers l'extérieur à partir de ladite partie cylindrique intérieure.

9. Dispositif porte-outil selon l'une quelconque des revendications 4 à 8, caractérisé par le fait que ledit moyen d'entraînement (59) comprend une bague (60) à denture extérieure fixée à l'extrémité arrière de ladite parti cylindrique intérieure (12) et centrée selon ledit axe principal (4) et un arbre d'entrée transversal (63) porté par ledit support et dont une extrémité peut être reliée à un moyen d'entraînement extérieur, cet arbre d'entrée (63) portant, à l'intérieur dudit support, une vis sans fin (64) qui engrène avec ladite bague (60).

10. Dispositif selon l'une quelconque des revendications précédentes, caractérisé par le fait que ledit carter (9) comprend une partie cylindrique extérieure (13) s'étendant vers l'avant et un couvercle radial (14) qui est fixé sur la face avant de cette partie cylindrique extérieure (13') et qui porte ledit fourreau porte-broche.

11. Dispositif selon l'une quelconque des revendications précédentes, caractérisé par le fait que ledit fourreau porte-outil (21) comprend une partie cylindrique (23) dont la partie d'extrémité arrière est disposée dans une ouverture cylindrique avant (17) du carter (9) en vue de son centrage et de sa rotation selon ledit axe secondaire et qui présente un épaulement annulaire extérieur (25) en vue de son maintien axial, cet épaulement annulaire étant disposé avec jeu entre la face avant dudit carter et une partie radiale d'une bague de maintien (26) fixée audit carter.

12. Dispositif selon la revendication 11, caractérisé par le fait que ledit moyen de réglage est formé par un arbre (53) présentant une denture (54) inserrée dans ladite bague de maintien et en prise avec une denture (52) formée à la périphérie dudit épaulement annulaire, arbre qui s'étend au travers de ladite bague de maintien en vue de son entraînement en rotation.

13. Dispositif selon l'une des revendications 11 et 12, caractérisé par le fait qu'il comprend un moyen permettant de solidariser de manière amovible ledit fourreau porte-broche (21) audit carter (9), ce moyen étant formé par des pièces de blocage (57) qui, lorsqu'elles sont serrées, appuient sur ledit épaulement annulaire (25) pour l'appliquer contre la face avant dudit carter (9).

14. Dispositif porte-outil selon l'une quelconque des revendications précédentes, caractérisé par le fait que ledit arbre secondaire est porté, par l'intermédiaire de roulements, d'une part par ledit carter et d'autre part par ledit fourreau porte-broche.

FIG.1

1/2

0086243

2/2

0086243

FIG.2

00862.43

Office européen
des brevets

**RAPPORT DE RECHERCHE EUROPEENNE**

Numéro de la demande

EP    82 10 1055

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 23 Q    1/16 |
| X,Y | FR-A-2 276 142  (CREUSOT-LOIRE) *Page 2, ligne 25 - page 5, ligne 22; figures 2-5* | 1,3-14 | B 23 C    9/00 |
| | --- | | |
| Y | FR-A-1 517 987  (TERMOZ) *Page 2, colonne de droite, lignes 1-38; figure 1* | 1,3,9-11,13 | |
| | --- | | |
| Y | FR-E-   50 842  (EYMARD) *Page 1, ligne 54 - page 3, ligne 30; figures 1-3* | 4,8-10,12,14 | |
| | --- | | |
| Y | FR-A-1 256 688  (GUILLEBAUD) *Page 2, colonne de droite, lignes 31-58; figure 1* | 4,5 | **DOMAINES TECHNIQUES RECHERCHES (Int. Cl. ³)** |
| | --- | | |
| A | US-A-3 613 192  (TANABE et al.) *Colonne 4, lignes 2-5* | 2 | B 23 B B 23 C B 23 Q |
| | --- | | |
| A | DE-A-2 110 574  (SCHULZ) *Figure unique* | 2,14 | |
| | --- | | |
| A | DE-A-2 612 353  (WIELAND) | | |
| | --- | | |
| A | DE-C-  258 772  (ZEITZ) | | |
| | ---            -/- | | |

Le présent rapport de recherche a été établi pour toutes les revendications

| Lieu de la recherche | Date d'achèvement de la recherche | Examinateur |
|---|---|---|
| LA HAYE | 08-11-1982 | ROSENBAUM H.F.J. |

**Office européen
des brevets**

**RAPPORT DE RECHERCHE EUROPEENNE**

EP  82 10 1055

| | DOCUMENTS CONSIDERES COMME PERTINENTS | | Page 2 | |
|---|---|---|---|---|
| Catégorie | Citation du document avec indication, en cas de besoin, des parties pertinentes | Revendication concernée | CLASSEMENT DE LA DEMANDE (Int. Cl. ³) | |
| A | GB-A- 359 382 (MASINI) | | | |
| | --- | | | |
| A | US-A-2 392 035 (FETT) | | | |
| | ----- | | | |
| | | | DOMAINES TECHNIQUES RECHERCHES (Int. Cl. ³) | |

Le présent rapport de recherche a été établi pour toutes les revendications

| Lieu de la recherche | Date d'achèvement de la recherche | Examinateur |
|---|---|---|
| LA HAYE | 08-11-1982 | ROSENBAUM H.F.J. |